# EUROPÄISCHE PATENTSCHRIFT

(11) **EP 3 807 523 B1**
(45) Veröffentlichungstag und Bekanntmachung des Hinweises auf die Patenterteilung: **30.08.2023**
(21) Anmeldenummer: 19733392.5
(22) Anmeldetag: 05.06.2019
(51) Int. Cl.: F03D 1/06

(54) **ANORDNUNG ZUR ZUG- BZW. LÄNGSKRAFTEINLEITUNG SOWIE VERFAHREN ZUR HERSTELLUNG EINER SOLCHEN ANORDNUNG**
ARRANGEMENT FOR TRACTIVE OR LONGITUDINAL FORCE TRANSMISSION AND METHOD FOR PRODUCING SUCH AN ARRANGEMENT
DISPOSITIF POUR L'INTRODUCTION DE FORCE LONGITUDINALE OU DE TRACTION AINSI QUE PROCÉDÉ POUR LA FABRICATION D'UN TEL DISPOSITIF

(30) Priorität: 13.06.2018 DE 102018114098
(43) Veröffentlichungstag der Anmeldung: 21.04.2021
(73) Patentinhaber: Schultes, Klaus, 26607 Aurich (DE)
(72) Erfinder: Schultes, Klaus, 26607 Aurich (DE)
(74) Vertreter: Manasse, Uwe
(86) Internationale Anmeldenummer: PCT/DE2019/100503
(87) Internationale Veröffentlichungsnummer: WO 2019/238165

(56) Entgegenhaltungen:
- EP-A2- 0 237 998
- EP-A2- 1 950 414
- US-A1- 2012 070 295

## Beschreibung

Die vorliegende Erfindung betrifft eine Anordnung zur Zug- bzw. Längskrafteinleitung bei einem mit Querausnehmungen für je einen Befestigungsbolzen versehenen Bauteil, wobei an jedem der Befestigungsbolzen ein für die Krafteinleitung vorgesehener Zugbolzen, umfassend ein erstes Ende und ein zweites Ende, angreift, sowie ein Verfahren zur Herstellung einer Anordnung zur Zug- bzw. Längskrafteinleitung bei einem Bauteil.

Aus dem deutschen Patent DE 2832098 C2 ist bereits eine derartige Anordnung bekannt. Die darin verwendete Verbindung wird auch als T-Bolzen-Verbindung bzw. Querbolzenverbindung bezeichnet.

Die bekannte Anordnung weist aufgrund der erforderlichen Querbolzendurchmesser und Abstände eine relativ geringe Tragfähigkeit auf. Dokument EP 0 237 998 A2 offenbart eine Stand der Technik-Anordnung aus einem anderen technischen Gebiet.

Der vorliegenden Erfindung liegt somit die Aufgabe zugrunde, bei im Prinzip ähnlichen äußeren Abmessungen eine Verbindung bereitzustellen, die eine höhere Tragfähigkeit aufweist.

Erfindungsgemäß wird diese Aufgabe gelöst, durch eine Anordnung zur Zug- bzw. Längskrafteinleitung bei einem mit Querausnehmungen für Befestigungsbolzen versehenen Bauteil, wobei an jedem der Befestigungsbolzen mindestens ein für die Krafteinleitung vorgesehener Zugbolzen, umfassend ein erstes Ende und ein zweites Ende, angreift, wobei sich der bzw. jeder Zugbolzen in einem Loch im Bauteil erstreckt und an mindestens einem seiner ersten und zweiten Enden eine Öse aufweist, durch die sich ein zugehöriger Befestigungsbolzen erstreckt, wobei das Bauteil ein Composite-Bauteil oder ein Faserverbundkunststoff-Bauteil ist.

Weiterhin wird die Aufgabe gelöst durch ein Verfahren zur Herstellung einer Anordnung zur Zug- bzw. Längskrafteinleitung nach einem der Ansprüche 1 bis 6, umfassend die Schritte:
Bereitstellen eines Bauteils mit Löchern und Querausnehmungen, Anordnen von Zugbolzen, die jeweils an mindestens einem Ende eine Öse aufweisen, in zugehörigen Löchern, Einführen von Befestigungsbolzen in die Querausnehmungen und durch die Ösen, und Sichern der Befestigungsbolzen, wobei das Bauteil ein Composite-Bauteil oder ein Faserverbundkunststoff-Bauteil ist.

Bei der Anordnung kann vorgesehen sein, dass die Befestigungsbolzen mit einem Sicherungsmittel vor Bewegung gegenüber dem Bauteil gesichert sind.

Weiterhin kann vorgesehen sein, dass die Querausnehmungen in einer Ebene nebeneinander angeordnet sind.

Gemäß einer weiteren besonderen Ausführungsform können die Querausnehmungen in mehreren Ebenen versetzt zueinander alternierend angeordnet sein.

Vorteilhafterweise verlaufen die Löcher im Wesentlichen senkrecht zu den Querausnehmungen, vorzugsweise wobei jedes der Löcher eine zugehörige der Querausnehmungen kreuzt.

Gemäß einer weiteren besonderen Ausführungsform hat ein Verhältnis a/d zwischen einem Abstand a zwischen den Längsachsen zweier benachbarter Querausnehmungen zu einem Durchmesser d der Querausnehmungen einen Wert im Bereich zwischen ca. 2 und ca. 3.

Zweckmäßigerweise sind die Befestigungsbolzen zumindest an der Stelle, an der ein jeweiliger Zugbolzen angreift, im Querschnitt massiv ausgestaltet.

Insbesondere kann dabei vorgesehen sein, dass die Befestigungsbolzen zumindest an der Stelle, an der ein jeweiliger Zugbolzen angreift, im Querschnitt derart ausgestaltet sind, dass sie in Belastungsrichtung ein höheres Trägheitsmoment als senkrecht zur Belastungsrichtung aufweisen.

Zudem kann vorgesehen sein, dass die Befestigungsbolzen jeweils mindestens ein keilförmiges Element zum Aufbringen einer Vorspannkraft umfassen.

Weiterhin kann vorgesehen sein, dass der Befestigungsbolzen mehrteilig, insbesondere zwei- oder dreiteilig, ausgebildet ist.

Gemäß einer weiteren besonderen Ausführungsform weist der Zugbolzen nur an einem seiner ersten und zweiten Enden eine Öse und an dem anderen seiner ersten und zweiten Enden einen Gewindeschaft auf.

Vorteilhafterweise kann eines der ersten und zweiten Enden des Zugbolzens als ein mehrarmiges Ende mit jeweils einer Öse ausgebildet sein, durch die sich jeweils ein zugehöriger Befestigungsbolzen erstreckt.

Weiterhin ist das Bauteil ein Composite-Bauteil oder ein Faserverbundkunststoff-Bauteil Zudem kann vorgesehen sein, dass das Bauteil (12) ein Rotorblatt für eine Windenergieanlage ist.

Zweckmäßigerweise sind einem der Befestigungsbolzen zwei oder mehr Zugbolzen zugeordnet.

Die Erfindung liefert auch einen Blattanschluss für ein Rotorblatt einer Windenergieanlage zum Anschließen des Rotorblatts an ein Anschlussteil, insbesondere eine Rotornabe, umfassend eine Anordnung nach Anspruch 6, wobei das Bauteil ein Rotorblatt ist und der Anschluss an das Anschlussteil mittels der Zugbolzen hergestellt ist.

Außerdem liefert die Erfindung ein Rotorblatt für eine Windenergieanlage aus einem quergeteilten Hohlprofil mit einer Stoßverbindung, umfassend eine Anordnung nach Anspruch 6.

Gemäß einer besonderen Ausführungsform weist der bzw. jeder Zugbolzen an seinen ersten und zweiten Enden jeweils eine Öse auf, durch die sich jeweils ein zugehöriger Befestigungsbolzen erstreckt.

Bei dem Verfahren kann vorgesehen sein, dass die Löcher im Wesentlichen senkrecht zu den Querausnehmungen verlaufen, vorzugsweise wobei jedes der Löcher eine zugehörige der Querausnehmungen kreuzt.

Vorteilhafterweise werden die Löcher und/oder Querausnehmungen durch Vorhalten oder Erzeugen von Nuten bei der Fertigung des Bauteils erzeugt.

Ferner kann vorgesehen sein, dass die Löcher und/oder Querausnehmungen durch nachträgliche Bearbeitung, insbesondere durch Bohren und/oder Fräsen, erzeugt werden.

Weiterhin kann vorgesehen sein, dass das Verfahren ferner umfasst: Einführen eines der ersten und zweiten Enden jedes Zugbolzen in ein Anschlussteil, und Verbinden eines der ersten und zweiten Enden jedes Zugbolzen mit dem Anschlussteil.

Schließlich kann vorgesehen sein, dass die Befestigungsbolzen jeweils mindestens ein keilförmiges Element zum Aufbringen einer Vorspannkraft umfassen und dass das Verfahren weiterhin den Schritt umfasst: Bewegen der keilförmigen Elemente in einer jeweilig zugehörigen Querausnehmung in einer Richtung zum Aufbringen einer Vorspannkraft auf den Zugbolzen.

Der Erfindung liegt die überraschende Erkenntnis zu Grunde, dass durch Hinzufügen einer Öse an einem Ende des Zugbolzens, bei im Prinzip gleichbleibenden äußeren Abmessungen jedes Zugmittels, ein Abstand zwischen zwei benachbarten Zugmitteln im Vergleich zum Stand der Technik deutlich reduziert werden kann. Hierdurch muss der Durchmesser des Querbolzens nicht mehr größer als der des Zugmittels sein, wodurch sich die Anzahl der Zugmittel pro Längeneinheit und damit die Tragfähigkeit der Anordnung im Vergleich zum Stand der Technik deutlich steigern lässt.

Weitere Merkmale und Vorteile der Erfindung ergeben sich aus den beigefügten Ansprüchen und der nachfolgenden Beschreibung, in der anhand der schematischen Zeichnungen mehrere Ausführungsbeispiele der vorliegenden Erfindung beschrieben werden. Dabei zeigt/zeigen:
- Figur 1: eine Schnittansicht einer Anordnung zur Zug- bzw. Längskrafteinleitung, gemäß dem Stand der Technik;
- Figur 2: eine Schnittansicht entlang der Linie II-II in Figur 1;
- Figur 3: eine Schnittansicht einer Anordnung zur Zug- bzw. Längskrafteinleitung gemäß einer besonderen Ausführungsform der Erfindung;
- Figur 4: eine Schnittansicht entlang der Linie IV-IV in Figur 3;
- Figur 5: eine Schnittansicht Anordnung zur Zug- bzw. Längskrafteinleitung gemäß einer weiteren besonderen Ausführungsform der Erfindung;
- Figur 6: eine Schnittansicht entlang der Linie VI-VI in Figur 5;
- Figur 7: eine Schnittansicht einer Anordnung zur Zug- bzw. Längskrafteinleitung gemäß einer weiteren besonderen Ausführungsform der Erfindung;
- Figur 8: eine Schnittansicht entlang der Linie VIII-VIII in Figur 7;
- Figur 9: eine Schnittansicht einer Anordnung zur Zug- bzw. Längskrafteinleitung gemäß einer weiteren besonderen Ausführungsform der Erfindung;
- Figur 10: eine Schnittansicht entlang der Linie X-X in Figur 9;
- Figur 11: eine Schnittansicht einer Anordnung zur Zug- bzw. Längskrafteinleitung gemäß einer weiteren besonderen Ausführungsform der Erfindung;
- Figur 12: eine Schnittansicht einer Anordnung zur Zug- bzw. Längskrafteinleitung gemäß einer weiteren besonderen Ausführungsform der Erfindung;
- Figur 13: eine Schnittansicht entlang der Linie XIII-XIII in Figur 12;
- Figur 14: eine Schnittansicht einer Anordnung zur Zug- bzw. Längskrafteinleitung gemäß einer weiteren besonderen Ausführungsform der Erfindung;
- Figur 15: eine Schnittansicht einer Anordnung zur Zug- bzw. Längskrafteinleitung gemäß einer weiteren besonderen Ausführungsform der Erfindung; und
- Figur 16: eine Schnittansicht entlang der Linie XVI-XVI in Figur 15.

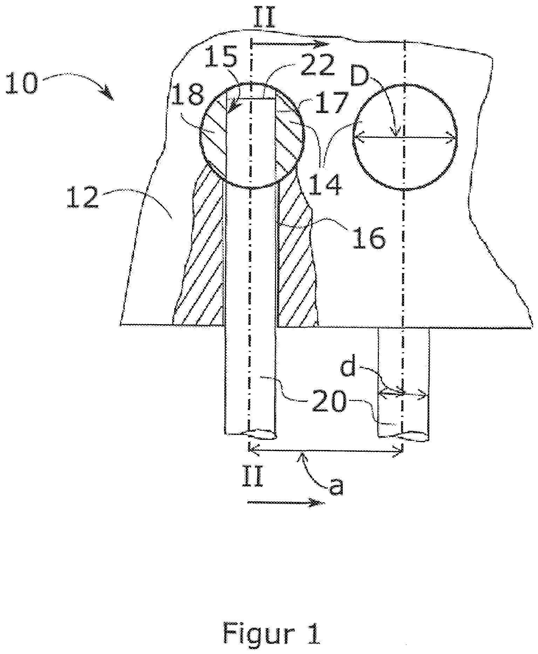

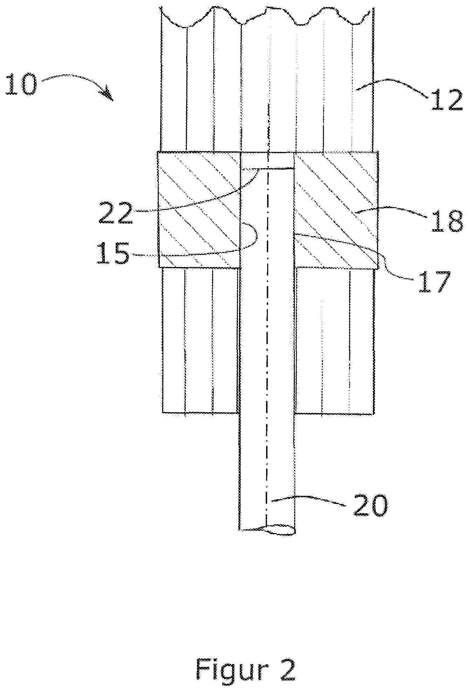

Die Figuren 1 und 2 zeigen eine Anordnung 10 zur Zug- bzw. Längskrafteinleitung entsprechend dem Stand der Technik. Figur 1 zeigt eine Anordnung 10 in Teilschnittansicht. Die Anordnung 10 weist ein Bauteil 12 auf, welches Querausnehmungen 14 (in der Figur 1 sich senkrecht in die Zeichenebene hinein erstreckend) und Löcher 16 (in der Figur 1 sich parallel zur Zeichenebene vertikal erstreckend) aufweist. Die Querausnehmungen 14 und die Löcher 16 sind jeweils senkrecht zueinander angeordnet. Die Anordnung 10 weist ferner Befestigungsbolzen 18, die sich jeweils in den Querausnehmungen 14 erstrecken, sowie Zugbolzen 20 auf, die ein erstes Ende 22 und ein zweites Ende (nicht gezeigt) aufweisen und sich jeweils in den Löchern 16 erstrecken. Die Befestigungsbolzen 18 umfassen weiterhin eine Gewindebohrung 15 (nicht im Detail dargestellt) und die Zugbolzen 20 einen Gewindeschaft 17 (nicht im Detail dargestellt). Die Zugbolzen 20 sind mit ihrem Gewindeschaft 17 in den Gewindebohrungen 15 der Befestigungsbolzen 18 eingeschraubt. Aufgrund der benötigten Gewindebohrung 15 ist in dieser Anordnung 10 ein Durchmesser D der Befestigungsbolzen 18 zwingend größer als ein Durchmesser d der Zugbolzen 20. Um eine ausreichende mechanische Stabilität der Verbindung zwischen den Zugbolzen 20 und den Befestigungsbolzen 18 zu gewährleisten, werden im Stand der Technik Werte von D ≈ 2d gewählt. Um weiterhin eine ausreichende mechanische Stabilität des Bauteils 2 bei einer Kraftübertragung vom Zugbolzen 20 zu dem Bauteil 12 zu gewährleisten, ist es notwendig, ausreichend Material zwischen den Querausnehmungen 14 im Bauteil zu belassen. Hierdurch ergibt sich ein typischer minimaler Abstand a zwischen Längsachsen zweier benachbarter Querausnehmungen 14 zueinander von a ≈ 2,7d bis a ≈ 3d. Weiterhin ist zu beachten, dass sich eine gemäß dem Stand der Technik in den Befestigungsbolzen 18 befindliche Gewindebohrung 15 negativ auf die Stabilität der Befestigungsbolzen 18 auswirkt.

Figur 2 zeigt eine Schnittansicht der Anordnung entlang einer gestrichelten Linie von Figur 1. Hierin ist gezeigt, wie der Zugbolzen 20 in den Befestigungsbolzen 18 eingreift (T-Bolzen-Verbindung).

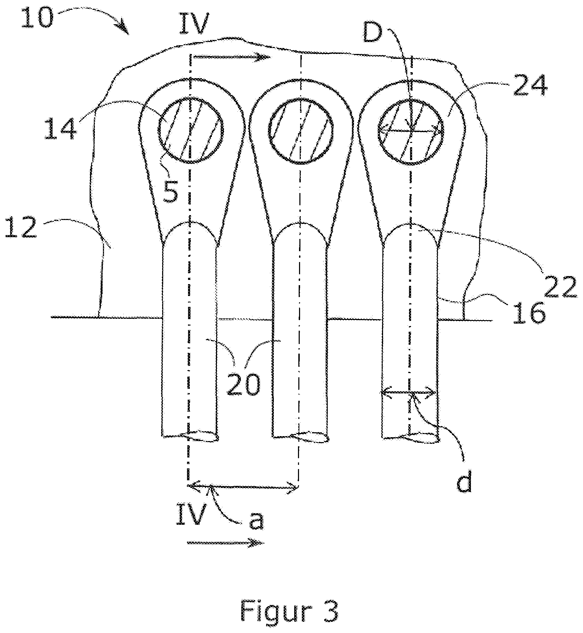

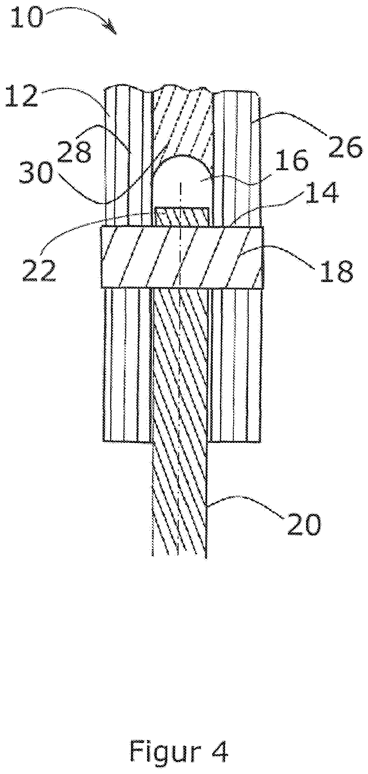

Anhand der Figuren 3 und 4 soll nun eine Anordnung zur Zug- bzw. Längskrafteinleitung gemäß einer besonderen Ausführungsform der Erfindung erläutert werden. Figur 3 zeigt eine Schnittansicht der besonderen Ausführungsform entlang einer durch die Zugbolzen 20 aufgespannten Ebene. Ebenso wie im Stand der Technik weist die erfindungsgemäße Anordnung 10 ein Bauteil 12 auf, welches Querausnehmungen 14 und Löcher 16 aufweist. Die Anordnung 10 weist ferner ebenfalls Befestigungsbolzen 18 auf, die sich jeweils in den Querausnehmungen 14 erstrecken, sowie Zugbolzen 20, die ein erstes Ende 22 und ein zweites Ende (nicht gezeigt) aufweisen und sich jeweils in den Löchern 16 erstrecken. Ein Durchmesser der Querausnehmungen 14 und/oder der Löcher 16 kann im Wesentlichen einem Durchmesser der Befestigungsbolzen 18, bzw. der Zugbolzen 20 entsprechen. Weiterhin kann eine Querschnittsform der Querausnehmungen 14 und/oder der Löcher 16 im Wesentlichen einer Querschnittsform der Befestigungsbolzen 18, bzw. der Zugbolzen 20 entsprechen. Die Löcher können weiterhin beispielsweise als Sacklöcher oder als Durchgangslöcher ausgestaltet sein. Die Löcher und/oder Querausnehmungen können durch nachträgliche Bearbeitung, und/oder durch Vorhalten von Nuten bei der Fertigung des Bauteils 12 erzeugt worden sein. Die Zugbolzen 20 weisen an ihren ersten Enden 22 je eine Öse 24 auf, durch die sich ein zugehöriger Befestigungsbolzen 18 erstreckt. An jedem der Befestigungsbolzen 18 greift einer der Zugbolzen 20 über eine Öse 24 an. Alternativ können an jedem der Befestigungsbolzen 18 auch zwei oder mehr Zugbolzen 20 über jeweils eine Öse 24 angreifen. Aufgrund dieser Anordnung 10 kann ein Durchmesser D der Befestigungsbolzen 18 kleiner oder gleich einem Durchmesser d der Zugbolzen 20 gewählt werden. Hierdurch kann erreicht werden, dass zumindest in einer bevorzugten Ausführungsform ein Abstand a der Längsachsen benachbarter Querausnehmungen 14 zueinander bis auf das erforderliche Mindestmaß von a ≈ 2d reduziert wird, welches sich beispielsweise aus einer Schlüsselweite und/oder einem Werkzeugdurchmesser ergibt.

Vorzugsweise sind die Befestigungsbolzen 18 mit einem Sicherungsmittel (nicht gezeigt) vor Bewegung gegenüber dem Bauteil 12 gesichert. Als geeignete Sicherungsmittel können unter anderem Haken, Stifte, Klebstoff, Schrauben, Nieten oder Schweißnähte verwendet werden. Mit dem Sicherungsmittel wird der Befestigungsbolzen 18 an dem Bauteil 12 befestigt. Alternativ kann der Befestigungsbolzen 18 mit dem Sicherungsmittel auch an dem Zugbolzen 20 befestigt werden oder eine andere form- oder kraftschlüssige Verbindung des Befestigungsbolzens 18 gegenüber dem Bauteil 12 geschaffen werden. Die Befestigungsbolzen 18 weisen in der Ausführungsform gemäß Figur 3 einen kreisförmigen Querschnitt auf. Sie können aber auch einen anderen Querschnitt aufweisen.

In Figur 3 sind die Querausnehmungen 14 in einer Ebene, die senkrecht zur Schnittebene von Figur 3 und die Mittelpunkte der Ösen 24 schneidet, nebeneinander angeordnet. Weiterhin sind die Löcher 16 im Wesentlichen senkrecht zu den Querausnehmungen 14 angeordnet und jedes der Löcher 16 kreuzt eine der Querausnehmungen 14. Hierbei hat ein Verhältnis a/d zwischen einem Abstand a zwischen den Längsachsen zweier benachbarter Querausnehmungen 14 zu einem Durchmesser d der Querausnehmungen 14, vorzugsweise einen Wert im Bereich zwischen ca. 2 und ca. 3. Das Verhältnis a/d kann damit in einem weiteren Bereich als im Stand der Technik gewählt werden. Insbesondere durch einen niedrigen Wert für das Verhältnis a/d lässt sich durch eine erhöhte Anzahl von Zugbolzen 20 und Befestigungsbolzen 18 unter anderem die Tragfähigkeit der Verbindung, bei im Prinzip gleichen äußeren Abmessungen, deutlich erhöhen.

Gemäß Figur 3 sind die Befestigungsbolzen 18 zumindest an der Stelle, an der ein jeweiliger Zugbolzen 20 angreift, im Querschnitt massiv ausgestaltet. Vorzugsweise sind die Befestigungsbolzen 18 durchgängig massiv ausgestaltet. Insbesondere weisen die Befestigungsbolzen 18 keine Bohrungen, wie beispielsweise Gewindebohrungen 15 in hoch belasteten Bereichen auf. Sie sind daher nicht in ihrem Querschnitt geschwächt.

Figur 4 zeigt eine Schnittansicht entlang der Linie IV-IV von Figur 3. Hierbei ist das Bauteil 12 beispielsweise ein Faserverbundkunststoff-Bauteil, welches beispielsweise einen ersten Deckbereich 26, einen zweiten Deckbereich 28 und eine Zwischenlage 30 aufweist (Sandwich-Bauweise). Das Loch 16 ist hierbei als eine Nut zwischen dem ersten und dem zweiten Deckbereich 28, 30 ausgestaltet. Die Nut kann schon bei der Herstellung des Bauteils 12 vorgehalten werden oder durch nachträgliche Bearbeitung, wie beispielsweise durch Hinzufügen einer Bohrung und/oder Fräsung, eingebracht werden.

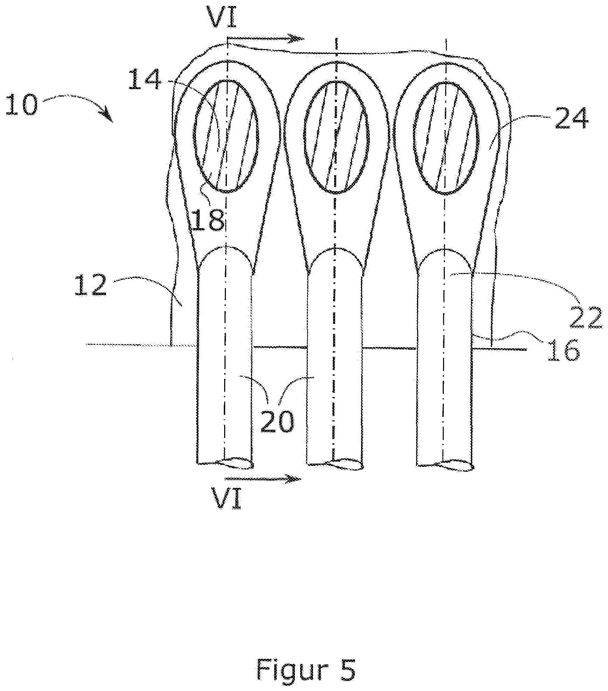

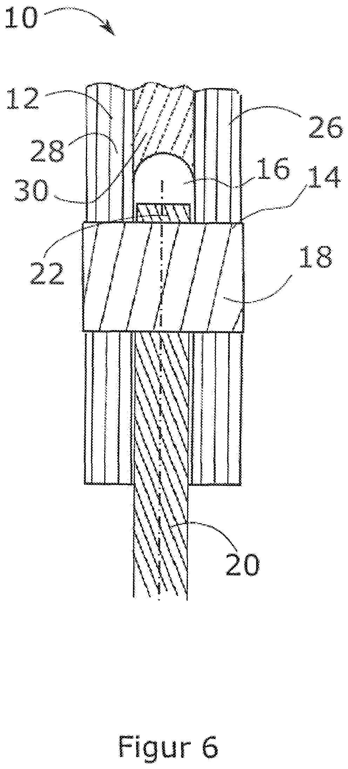

In den Figuren 5 und 6 ist eine Anordnung 10 zur Zug- bzw. Längskrafteinleitung gemäß einer weiteren besonderen Ausführungsform der Erfindung gezeigt, wonach die Befestigungsbolzen 18 zumindest an der Stelle, an der ein jeweiliger Zugbolzen 20 angreift, im Querschnitt derart ausgestaltet sind, dass sie in Belastungsrichtung ein höheres Trägheitsmoment als senkrecht zur Belastungsrichtung aufweisen. Die Befestigungsbolzen 20 sind hierbei mit einem Querschnitt beispielsweise in Form einer Ellipse ausgestaltet, wobei eine große Halbachse der Ellipse beispielsweise parallel zu einer Längsachse der Querausnehmung 14 und eine kleine Halbachse der Ellipse beispielsweise senkrecht zur Längsachse der Querausnehmung 14 ausgerichtet ist. Der Querschnitt der Öse 24 ist bevorzugt an den Querschnitt des Befestigungsbolzens 18 angepasst.

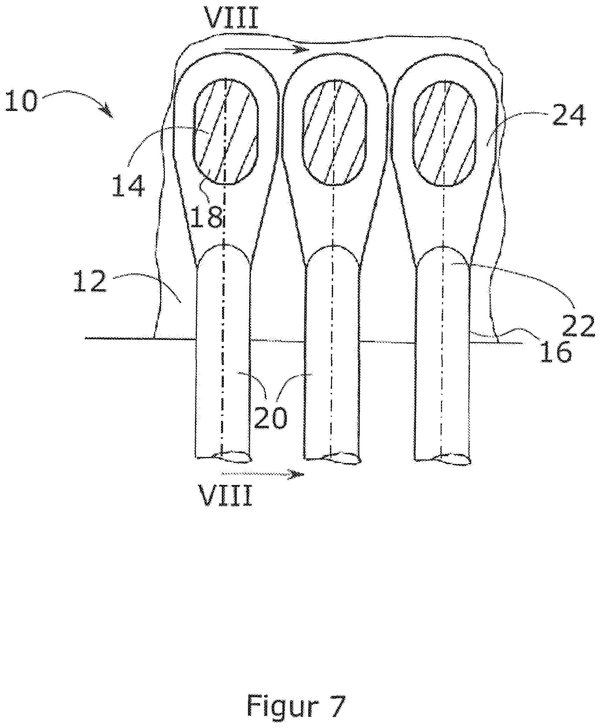

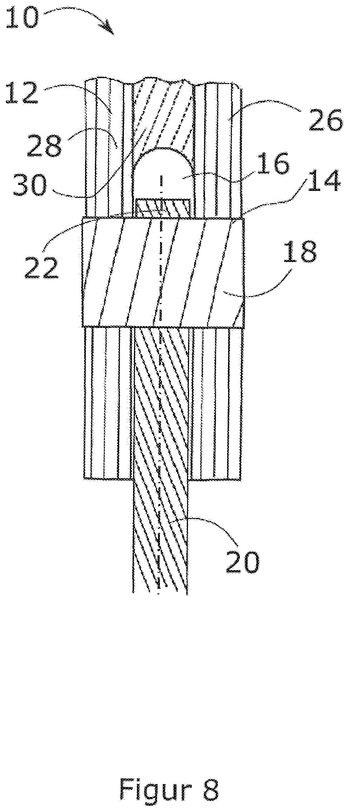

Die Figuren 7 und 8 zeigen eine Anordnung 10 zur Zug- bzw. Längskrafteinleitung gemäß einer weiteren besonderen Ausführungsform der Erfindung, wonach die Befestigungsbolzen 18 zumindest an der Stelle, an der ein jeweiliger Zugbolzen 20 angreift, im Querschnitt derart ausgestaltet sind, dass sie in Belastungsrichtung ein höheres Trägheitsmoment als senkrecht zur Belastungsrichtung aufweisen. Figur 8 zeigt eine Schnittansicht entlang der Linie VIII-VIII von Figur 7. Die Befestigungsbolzen 18 sind hierbei mit einem Querschnitt in Form eines Rechtecks mit abgerundeten Ecken ausgestaltet, wobei die längere Seite des Rechtecks parallel zur Belastungsrichtung verläuft. Der Querschnitt der Öse 24 ist auch in dieser Ausführungsform bevorzugt an den Querschnitt des Befestigungsbolzens 18 angepasst.

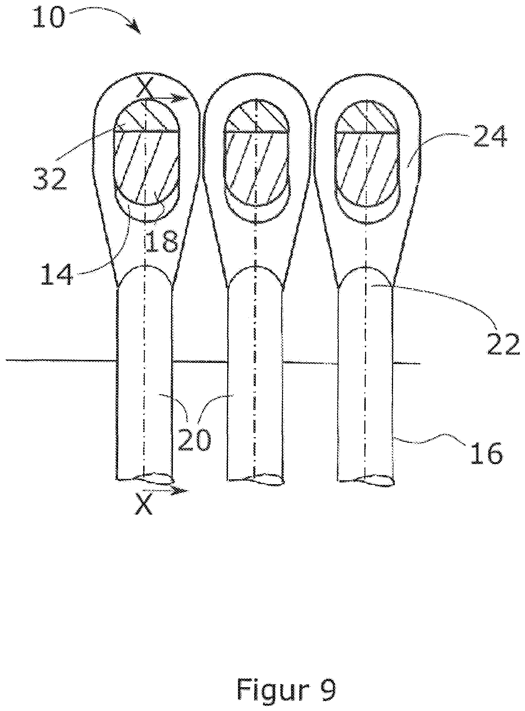

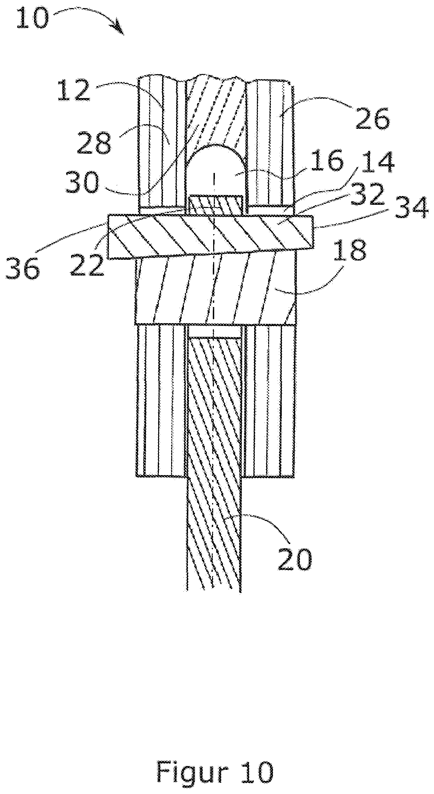

Die Figuren 9 und 10 zeigen eine Anordnung 10 zur Zug- bzw. Längskrafteinleitung gemäß einer weiteren besonderen Ausführungsform der Erfindung, nach der die Befestigungsbolzen 18 jeweils mindestens ein keilförmiges Element 32 zum Aufbringen einer Vorspannkraft umfassen. Nach dieser Ausführungsform können die Befestigungsbolzen 18 mehrteilig, insbesondere zwei- oder dreiteilig, ausgestaltet sein. Die Figuren 9 und 10 zeigen eine zweiteilige Ausführungsform der Befestigungsbolzen 18, wobei Figur 10 eine Schnittansicht entlang der Linie X-X von Figur 9 zeigt. Das keilförmige Element 32 weist in dieser Ausführungsform ein spitz zulaufendes Ende 34 und ein stumpfes Ende 36 auf. Durch Bewegen des keilförmigen Elements 32 in Richtung des spitz zulaufenden Endes 34, lässt sich eine Vorspannkraft auf den Zugbolzen 20 aufbringen.

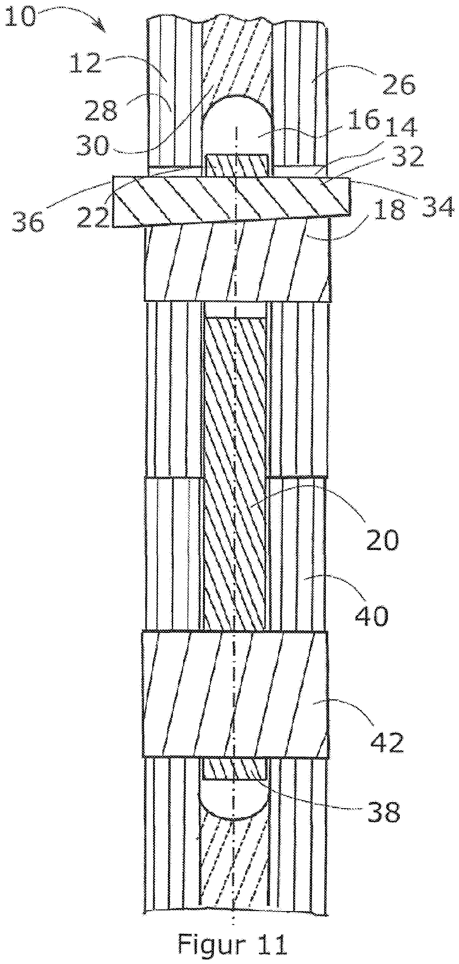

Figur 11 zeigt eine Anordnung 10 zur Zug- bzw. Längskrafteinleitung gemäß einer weiteren besonderen Ausführungsform der Erfindung, nach der sich ein erstes Ende 22 des Zugbolzens 20 in das Bauteil 12 erstreckt und mit dem Bauteil 12 verbunden ist und ein zweites Ende 38 des Zugbolzens 20 in ein Anschlussteil 40 erstreckt und mit dem Anschlussteil 40 verbunden ist. In Figur 11 ist die Verbindung des Zugbolzens 20 mit dem Bauteil 12 entsprechend einer Ausführungsform der Erfindung mit einem mehrteiligen Befestigungsbolzen 20 gezeigt, der ein keilförmiges Element 32 aufweist. Diese Verbindung kann jedoch auch durch eine beliebige andere Ausführungsform der Erfindung bereitgestellt werden. Figur 11 zeigt weiterhin die Verbindung des Zugbolzens 20 mit dem Anschlussteil 40 mittels eines zweiten Befestigungsbolzens 42, die erfindungsgemäß oder entsprechend einer Verbindung gemäß dem Stand der Technik ausgeführt sein kann. Beispielsweise kann der Zugbolzen 20 nur an einem seiner ersten und zweiten Enden 22, 38 eine Öse 24 und an dem anderen seiner ersten und zweiten Enden 22, 38 einen Gewindeschaft 17 (nicht gezeigt) aufweisen. In dieser Ausführungsform ermöglicht der Gewindeschaft 17 eine Schraubverbindung in eine in dem zweiten Befestigungsbolzen 42 vorgesehene Gewindebohrung 15 (nicht gezeigt).

Die in Figur 11 gezeigte Anordnung 10 zur Zug- bzw. Längskrafteinleitung kann in einer weiteren bevorzugten Ausführungsform der Erfindung dazu genutzt werden, einen Blattanschluss für ein Rotorblatt einer Windenergieanlage zu erzeugen. Der Blattanschluss dient zum Anschließen des Rotorblatts an ein Anschlussteil 40, insbesondere eine Rotornabe. Hierzu ist das Bauteil 12 ein Rotorblatt, insbesondere ein Rotorblatt einer Windenergieanlage. Das Anschlussteil 40 kann in dieser Ausführungsform beispielsweise eine Rotornabe sein.

Die in Figur 11 gezeigte Anordnung 10 zur Zug- bzw. Längskrafteinleitung kann in einer weiteren bevorzugten Ausführungsform der Erfindung dazu genutzt werden, ein Rotorblatt für eine Windenergieanlage aus einem quergeteilten Hohlprofil mit einer Stoßverbindung zu erzeugen. Das Bauteil 12 und das Anschlussteil 40 entsprechen dann in dieser Ausführungsform jeweils einem Teil des quergeteilten Hohlprofils. Bevorzugt weist in dieser Ausführungsform der bzw. jeder Zugbolzen 20 an beiden seiner ersten und zweiten Enden 22, 38 jeweils eine Öse 24 auf, durch die sich jeweils ein zugehöriger Befestigungsbolzen 18 erstreckt.

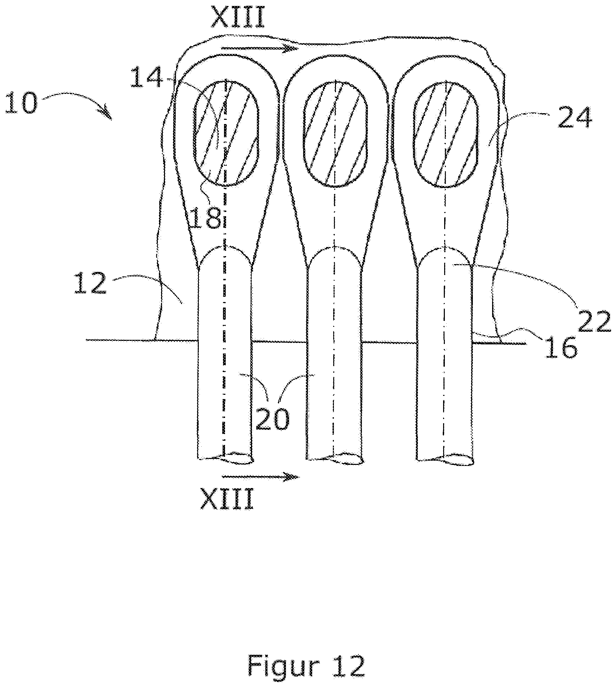

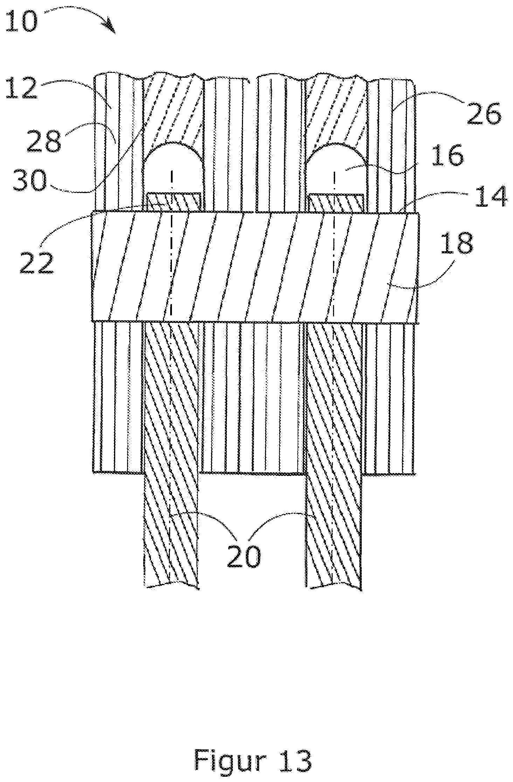

Anhand der Figuren 12 und 13 ergibt sich außerdem, dass in einer Anordnung 10 zur Zug- bzw. Längskrafteinleitung gemäß einer weiteren besonderen Ausführungsform der Erfindung an einem Befestigungsbolzen 18 auch mehrere Zugbolzen 20 angreifen können. Die in Figur 13 gezeigte Schnittansicht entlang der Linie XIII-XIII von Figur 12 zeigt ein Ausführungsbeispiel mit zwei Zugbolzen 20. Weitere Ausführungsbeispiele können auch drei oder mehr Zugbolzen 20 aufweisen.

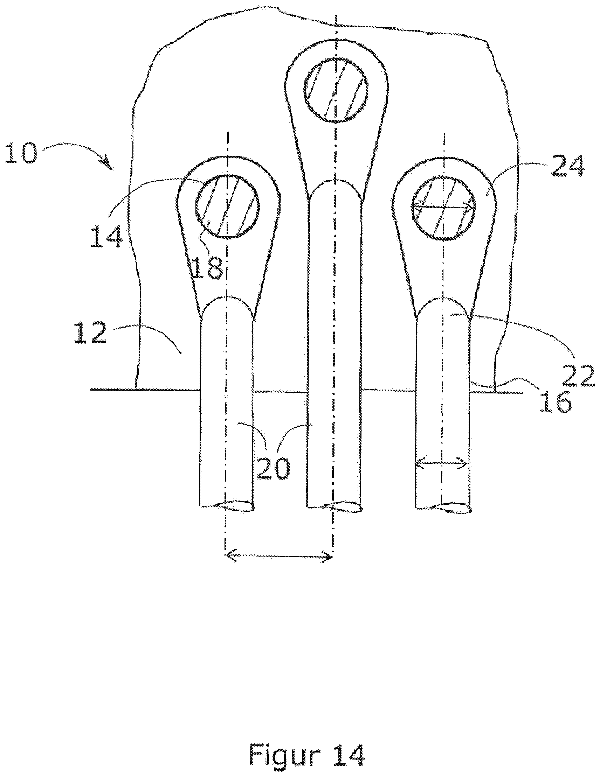

Figur 14 zeigt eine Anordnung 10 zur Zug- bzw. Längskrafteinleitung gemäß einer weiteren besonderen Ausführungsform der Erfindung, wonach die Querausnehmungen 14 in mehreren Ebenen versetzt zueinander alternierend angeordnet sind. Die Ebenen verlaufen hier sowohl senkrecht zur Schnittebene als auch senkrecht zu den Längsachsen der Zugbolzen 20. Die in Figur 14 gezeigte Schnittansicht zeigt ein Ausführungsbeispiel, bei dem die Querausnehmungen 14 in zwei Ebenen alternierend versetzt zueinander angeordnet sind. Gemäß weiteren Ausführungsformen der Erfindung können die Querausnehmungen 14 auch in drei oder mehr Ebenen zueinander angeordnet sein. Die Querausnehmungen 14 können neben der alternierenden Anordnung auch eine blockweise oder unregelmäßige Anordnung zueinander aufweisen. Weiterhin können die Ebenen an die Form des Bauteils 12 und/oder des Anschlussteils 40 angepasst sein.

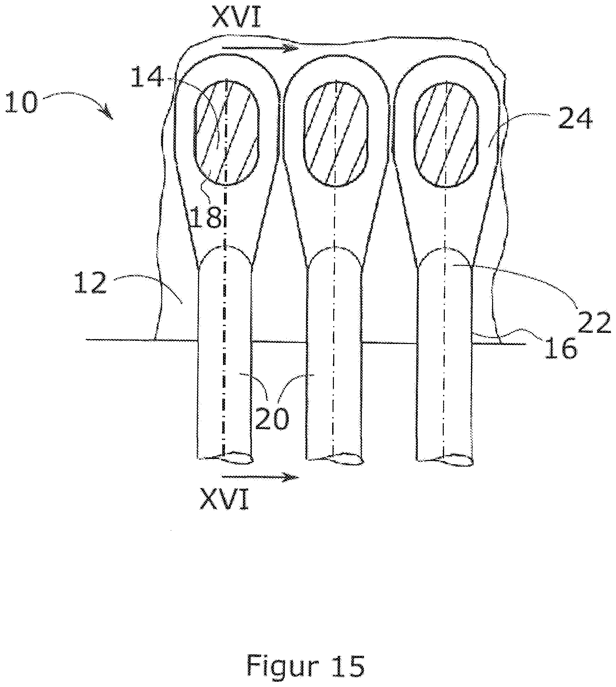

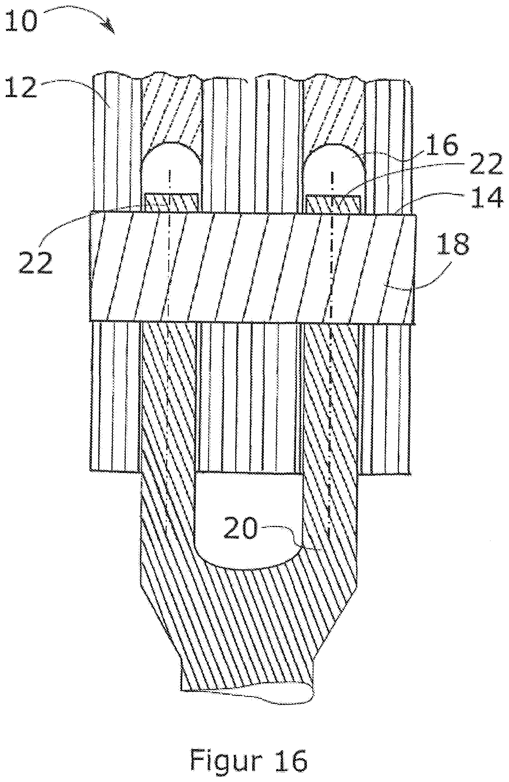

Die in den Figuren 15 und 16 gezeigte weitere Ausführungsform der Erfindung sieht eine Anordnung zur Zug- bzw. Längskrafteinleitung vor, bei der ein erstes Ende 22 des Zugbolzens 20 als ein mehrarmiges Ende mit jeweils einer Öse 24 ausgebildet ist. Durch die Ösen 24 erstreckt sich jeweils ein zugehöriger Befestigungsbolzen 18. Die Enden des bzw. der Zugbolzen 20 können sich gemäß dieser Ausführungsform der Erfindung in mehrere Löcher 16 erstrecken.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Der Schutzbereich ist in den beigefügten Ansprüchen definiert.

### Bezugszeichenliste

- 10: Anordnung
- 12: Bauteil
- 14: Querausnehmung
- 15: Gewindebohrung
- 16: Loch
- 17: Gewindeschaft
- 18: Befestigungsbolzen
- 20: Zugbolzen
- 22: Erstes Ende
- 24: Öse
- 26: Erster Deckbereich
- 28: Zweiter Deckbereich
- 30: Zwischenlage
- 32: Keilförmiges Element
- 34: Spitz zulaufendes Ende
- 36: Stumpfes Ende
- 38: Zweites Ende
- 40: Anschlussteil
- 42: Zweiter Befestigungsbolzen
- a: Abstand zweier benachbarter Längsachsen zueinander
- d: Durchmesser der Zugbolzen
- D: Durchmesser der Befestigungsbolzen

## Patentansprüche

1. Anordnung (10) zur Zug- bzw. Längskrafteinleitung bei einem mit Querausnehmungen (14) für Befestigungsbolzen (18) versehenen Bauteil (12), wobei an jedem der Befestigungsbolzen (18) mindestens ein für die Krafteinleitung vorgesehener Zugbolzen (20), umfassend ein erstes Ende (22) und ein zweites Ende, angreift, wobei sich der bzw. jeder Zugbolzen (20) in einem Loch (16) im Bauteil (12) erstreckt und an mindestens einem seiner ersten und zweiten Enden (22) eine Öse (24) aufweist, durch die sich ein zugehöriger Befestigungsbolzen (18) erstreckt, wobei das Bauteil (12) ein Composite-Bauteil oder ein Faserverbundkunststoff-Bauteil ist.

2. Anordnung (10) nach Anspruch 1, wobei die Befestigungsbolzen (18) mit einem Sicherungsmittel vor Bewegung gegenüber dem Bauteil (12) gesichert sind.

3. Anordnung (10) nach Anspruch 1 oder 2, wobei die Querausnehmungen (14) in einer Ebene nebeneinander angeordnet sind.

4. Anordnung (10) nach einem der vorhergehenden Ansprüche, wobei ein Verhältnis a/d zwischen einem Abstand a zwischen den Längsachsen zweier benachbarter Querausnehmungen (14) zu einem Durchmesser d beider benachbarter Querausnehmungen (14) einen Wert im Bereich zwischen ca. 2 und ca. 3 hat.

5. Anordnung (10) nach einem der Ansprüche 1 bis 4, wobei eines der ersten und zweiten Enden (22, 38) des Zugbolzens (20) als ein mehrarmiges Ende mit jeweils einer Öse (24) ausgebildet ist, durch die sich jeweils ein zugehöriger Befestigungsbolzen (18) erstreckt.

6. Anordnung (10) nach einem der vorhergehenden Ansprüche, wobei sich eines der ersten und zweiten Enden (22, 38) der Zugbolzen (20) in ein Anschlussteil (40) erstreckt und mit dem Anschlussteil (40) verbunden ist.

7. Blattanschluss für ein Rotorblatt einer Windenergieanlage zum Anschließen des Rotorblatts an ein Anschlussteil (40), insbesondere eine Rotornabe, umfassend eine Anordnung (10) nach Anspruch 6, wobei das Bauteil (12) ein Rotorblatt ist und der Anschluss an das Anschlussteil (40) mittels der Zugbolzen (20) hergestellt ist.

8. Rotorblatt für eine Windenergieanlage aus einem quergeteilten Hohlprofil mit einer Stoßverbindung, umfassend eine Anordnung (10) nach Anspruch 6.

9. Verfahren zur Herstellung einer Anordnung (10) zur Zug- bzw. Längskrafteinleitung nach einem der Ansprüche 1 bis 6, umfassend die Schritte:
Bereitstellen eines Composite-Bauteils oder eines Faserverbundkunststoff-Bauteils (12) mit Löchern (16) und Querausnehmungen (14), Anordnen von Zugbolzen (20), die jeweils an mindestens einem Ende (22, 38) eine Öse (24) aufweisen, in zugehörigen Löchern (16),
Einführen von Befestigungsbolzen (18) in die Querausnehmungen (14) und durch die Ösen (24), und
Sichern der Befestigungsbolzen (18).

## Claims

1. Arrangement (10) for tractive or longitudinal force introduction in a component (12) which is provided with transverse recesses (14) for fastening bolts (18), wherein at least one tension bolt (20), which is provided for introducing force and comprises a first end (22) and a second end, acts on each of the fastening bolts (18), wherein the or each tension bolt (20) extends in a hole (16) in the component (12) and, at at least one of its first and second ends (22), has an eye (24) through which an associated fastening bolt (18) extends, wherein the component (12) is a composite component or a fibre-reinforced plastics component.

2. Arrangement (10) according to Claim 1, wherein the fastening bolts (18) are secured against moving in relation to the component (12) by a securing means.

3. Arrangement (10) according to Claim 1 or 2, wherein the transverse recesses (14) are arranged next to one another in a plane.

4. Arrangement (10) according to one of the preceding claims, wherein a ratio a/d between a distance a between the longitudinal axes of two adjacent transverse recesses (14) to a diameter d of two adjacent transverse recesses (14) has a value in the range between approx. 2 and approx. 3.

5. Arrangement (10) according to one of Claims 1 to 4, wherein one of the first and second ends (22, 38) of the tension bolts (20) is designed as a multi-armed end each having an eye (24) through which an associated fastening bolt (18) in each case extends.

6. Arrangement (10) according to one of the preceding claims, wherein one of the first and second ends (22, 38) of the tension bolts (20) extends into a connection part (40) and is connected to the connection part (40).

7. Blade connection for a rotor blade of a wind turbine for connecting the rotor blade to a connection part (40), in particular a rotor hub, comprising an arrangement (10) according to Claim 6, wherein the component (12) is a rotor blade and the connection to the connection part (40) is produced by means of the tension bolts (20) .

8. Rotor blade for a wind turbine consisting of a transversely divided hollow profile with a butt joint, comprising an arrangement (10) according to Claim 6.

9. Method for producing an arrangement (10) for tractive or longitudinal force introduction according to one of Claims 1 to 6, comprising the steps of:
providing a composite component or a fibre-reinforced plastics component (12) having holes (16) and transverse recesses (14), arranging tension bolts (20), which each have an eye (24) at at least one end (22, 38), in associated holes (16),
inserting fastening bolts (18) into the transverse recesses (14) and through the eyes (24), and securing the fastening bolts (18).

## Revendications

1. Agencement (10) pour l'introduction d'une force de traction ou longitudinale dans un composant (12) pourvu d'évidements transversaux (14) pour des boulons de fixation (18), au moins un boulon de traction (20) prévu pour l'introduction d'une force, comprenant une première extrémité (22) et une deuxième extrémité, s'engageant sur chacun des boulons de fixation (18), le ou chaque boulon de traction (20) s'étendant dans un trou (16) dans le composant (12) et présentant à au moins une de ses première et deuxième extrémités (22) un œillet (24) à travers lequel s'étend un boulon de fixation (18) associé, le composant (12) étant un composant composite ou un composant en matière plastique composite fibreuse.

2. Agencement (10) selon la revendication 1, dans lequel les boulons de fixation (18) sont sécurisés par un moyen de sécurisation contre un mouvement par rapport au composant (12).

3. Agencement (10) selon la revendication 1 ou 2, dans lequel les évidements transversaux (14) sont agencés côte à côte dans un plan.

4. Agencement (10) selon l'une quelconque des revendications précédentes, dans lequel un rapport a/d entre une distance a entre les axes longitudinaux de deux évidements transversaux adjacents (14) et un diamètre d des deux évidements transversaux adjacents (14) a une valeur dans la plage comprise entre environ 2 et environ 3.

5. Agencement (10) selon l'une quelconque des revendications 1 à 4, dans lequel l'une des première et deuxième extrémités (22, 38) du boulon de traction (20) est réalisée sous la forme d'une extrémité à plusieurs bras avec respectivement un œillet (24) à travers lequel s'étend respectivement un boulon de fixation (18) associé.

6. Agencement (10) selon l'une quelconque des revendications précédentes, dans lequel l'une des première et deuxième extrémités (22, 38) du boulon de traction (20) s'étend dans une pièce de raccordement (40) et est reliée à la pièce de raccordement (40).

7. Raccordement de pale pour une pale de rotor d'une éolienne pour le raccordement de la pale de rotor à une pièce de raccordement (40), notamment un moyeu de rotor, comprenant un agencement (10) selon la revendication 6, dans lequel le composant (12) est une pale de rotor et le raccordement à la pièce de raccordement (40) est réalisé au moyen des boulons de traction (20).

8. Pale de rotor pour une éolienne constituée d'un profilé creux divisé transversalement avec une liaison bout-à-bout, comprenant un agencement (10) selon la revendication 6.

9. Procédé de fabrication d'un agencement (10) pour l'introduction d'une force de traction ou longitudinale selon l'une des revendications 1 à 6, comprenant les étapes suivantes :
la fourniture d'un composant composite ou d'un composant en matière plastique composite fibreuse (12) avec des trous (16) et des évidements transversaux (14), l'agencement de boulons de traction (20), qui présentent chacun un œillet (24) à au moins une extrémité (22, 38), dans des trous associés (16),
l'insertion de boulons de fixation (18) dans les évidements transversaux (14) et à travers les œillets (24), et
la sécurisation des boulons de fixation (18).
